**Europäisches Patentamt**

**European Patent Office**

**Office européen des brevets**

(19)

(11) Numéro de publication: **0 060 154**
**B1**

(12)                             **FASCICULE DE BREVET EUROPEEN**

(45) Date de publication du fascicule du brevet: **20.06.84**

(21) Numéro de dépôt: **82400210.9**

(22) Date de dépôt: **05.02.82**

(51) Int. Cl.³: **B 25 G 3/34,** B 29 J 1/00,
B 29 C 5/00

(54) **Procédé pour fixer un manche à un outil à soie et dispositif pour sa mise en oeuvre.**

(30) Priorité: **11.03.81 FR 8104819**

(43) Date de publication de la demande:
**15.09.82 Bulletin 82/37**

(45) Mention de la délivrance du brevet:
**20.06.84 Bulletin 84/25**

(84) Etats contractants désignés:
**AT BE CH DE GB IT LI LU NL SE**

(56) Documents cités:
FR - A - 588 473
FR - A - 2 088 773
FR - A - 2 418 070
FR - A - 2 452 232
GB - A - 971 619

(73) Titulaire: **GOUVY & Cie société anonyme**
**F-54380 Dieulouard (FR)**

(72) Inventeur: **Marchetti, Alexandre**
**286 rue Jeanne d'Arc**
**F-54000 Nancy (FR)**

(74) Mandataire: **Bouju, André**
**38 Avenue de la Grande Armée**
**F-75017 Paris (FR)**

Courier Press, Leamington Spa, England.

### Description

La présente invention concerne un procédé pour fixer un manche à un outil à soie, telle que fourche, bêche, rateau et analogue destiné à l'agriculture ou au jardinage.

L'invention vise également le dispositif pour la mise en oeuvre de ce procédé.

Les outils précités comprennent un organe de travail généralement en fer forgé, portant une tige d'emmanchage appelée soie. Pour fixer un manche à cet organe de travail, on enfonce la soie de ce dernier dans l'extrémité d'un manche en bois, au moyen d'une presse hydraulique ou mécanique. Pour éviter l'éclatement du bois, l'extrémité du manche est généralemente entourée par une douille métallique de forme adaptée qui est elle-même recouverte par un capuchon.

Ce procédé d'emmanchage des outils à soie présente de nombreux inconvénients.

En premier lieu, le moindre désaxage du manche en bois par rapport à la soie de l'outil cause un défaut d'assemblage se traduisant par un rebut du manche et/ou de l'ensemble de l'outil. De ce fait, de grandes précautions doivent être prises pour obtenir un centrage précis de la soie de l'outil par rapport à l'axe du manche en bois. De plus, le fait de percer le manche dans la zone la plus sollicitée affaiblit la résistance de l'outil.

Par ailleurs, lorsque le bois du manche sèche, la soie de l'outil a tendance a sortir du manche. Pour remédier à ce défaut, on est obligé de remplacer très souvent le manche de l'outil, ce qui constitue une contrainte considérable pour l'utilisateur.

D'autre part, dans le cas de nombreux outils à soie, et notamment dans le case des fourches, le manche doit être cintré et est de ce fait, relativement coûteux à réaliser.

La demanderesse a améloiré le mode de fixation classique précité, en engageant sur la soie de l'outil un tube rigide, en maintenant l'ensemble en position correct au moyen d'un support approprié et en coulant dans le tube une résine pour sceller la soie à ce tube.

Aprés durcissement de la résine, on engage un manche en bois dans l'extrémité ouverte du tube opposée à l'outil.

Ce procédé permet d'obtenir une fixation fiable du manche à l'outil.

De plus, la mise en oeuvre de ce procédé est peu coûteuse et est trés simple à exécuter.

Toutefois, ce procédé présente un inconvénient important. En effet, celui-ci nécessite l'immobilisation de l'outil et du tube pendant toute la durée du durcissement de la résine de scellement, c'est-à-dire pendant plusieurs heures, ce qui ralentit considérablement les cadences de production en série.

Le but de la présente invention est de remédier à cet inconvénient.

Dans le procédé visé par l'invention, on engage sur la soie de l'outil un tube rigide, on maintient l'ensemble en position au moyen d'un support, on introduit dans le tube une matière pour rendre la soie solidaire du tube et on engage ulterieurement un manche dans l'extrémité ouverte du tube opposée á l'outil (comme par FR—A—2 452 232).

Suivant l'invention, ce procédé est caractérisé en ce qu'on introduit dans le tube des grains de matière dure, on ajoute du ciment, ce dernier étant humidifié avant la couleé du melange dans le tube on soumet l'ensemble constitué par le tube et l'outil à des vibrations en vue de produire un tassement des grains et on dégage ensuite du support l'outil ainsi fixé au tube.

Grâce à ces vibrations, les grains de matière dure se tassent en s'appuyant les uns contre les autres et contre la face interne du tube et la soie de l'outil. Ce tassement des grains, a pour effet de rendre la soie immédiatement solidaire du tube, de sorte que l'ensemble constitué par l'outil fixé au tube peut être dégagé immédiatement du support. Ainsi, ce support devient aussitôt disponible pour recevoir un autre outil et un autre tube.

On peut ainsi augmenter considéralement la cadence de production en outils emmanchés.

De plus, le procédé conforme à l'invention est de mise en oeuvre particulièrement simple, de sorte qu'il ne nécessite aucune main-d'oeuvre hautement spécialisée.

La granulométrie des grains de matière dure présente une importance particulière. En effet, ces grains doivent être suffisamment fins pour pouvoir pénétrer facilement dans l'espace compris entre la face interne du tube et la soie de l'outil. Ils doivent cependant être suffisamment gros pour qu'après tassement, ils puissant produire l'effet de blocage désiré.

Il s'est ainsi avéré qu'un granulométrie des grains comprise entre 2 et 3 mm convenait dans la plupart des cas.

Il est préférable que ces grains soient anguleux, pour éviter que ceux-ci puissent rouler les uns sur les autres et pour permettre à ces grains, après tassement de se bloquer les uns par rapport aux autres, contre la face intérieure du tube et la soie de l'outil.

Ces grains peuvent être en toute matière non friable, telle que le quartz, le verre concassé, la grenaille métallique, les débris de matière plastique ou de bois et le mélange de ces matériaux.

Il est préférable en outre d'additionner au mélange de grains et de ciment de fines particules de sable, ces dernières ayant pour effet de combler les espaces vides compris entre les grains de matière dure qui présentent une granulométrie plus grosse que les particules de sable.

La fréquence et l'amplitude des vibrations appliquées au tube et à l'outil, doivent être suffisantes pour produire l'effet recherché de tassement des grains.

La demanderesse a obtenu des résultats satisfaisants en utilisant une fréquence de vibration comprise entre 500 et 30.000 cycles par minute, l'amplitude étant comprise entre 0,5 et 2 mm environ.

L'invention vise également le dispositif pour la mise en oeuvre du procédé précité.

Ce dispositif comprend un support pour maintenir la soie de l'outil engagée dans un tube sensiblement suivant l'axe de ce dernier et des moyens pour introduire à l'intérieur de ce tube une matière pour rendre la soie de l'outil solidaire du tube.

Ce dispositif est caractérisé suivant l'invention en ce qu'il comprend des moyens pour appliquer à l'ensemble constitué par le tube et l'outil des vibrations capables de produire un tassement de la matière précitée, coutenant des grains de matière dure et du ciment ce dernier étant humidifié avant le couleé du melange dans le tube.

D'autres particularités et avantages de l'invention apparaîtront encore dans la descrip-. tion ci-après.

Aux dessins annexés, donnés à titre d'exemples non limitatifs:

— la figure 1 est une vue schématique, latérale et en élévation du dispositif conforme à l'invention,

— la figure 2 est une vue de face, avec arrachement, de ce dispositif,

— la figure 3 est une vue latérale et en élévation, à plus grande échelle, d'une partie du dispositif,

— la figure 4 est une vue en coupe suivant le plan IV—IV de la figure 3,

— la figure 5 est une vue de face avec arrachement de cette partie du dispositif,

— la figure 6 est une vue en coupe longitudinale partielle d'un outil emmanché, conformément à l'invention.

On va d'abord décrire le dispositif conforme à l'invention pour emmancher un outil à soie, puis on décrira le procédé selon l'invention en même temps que le fonctionnement du dispositif précité.

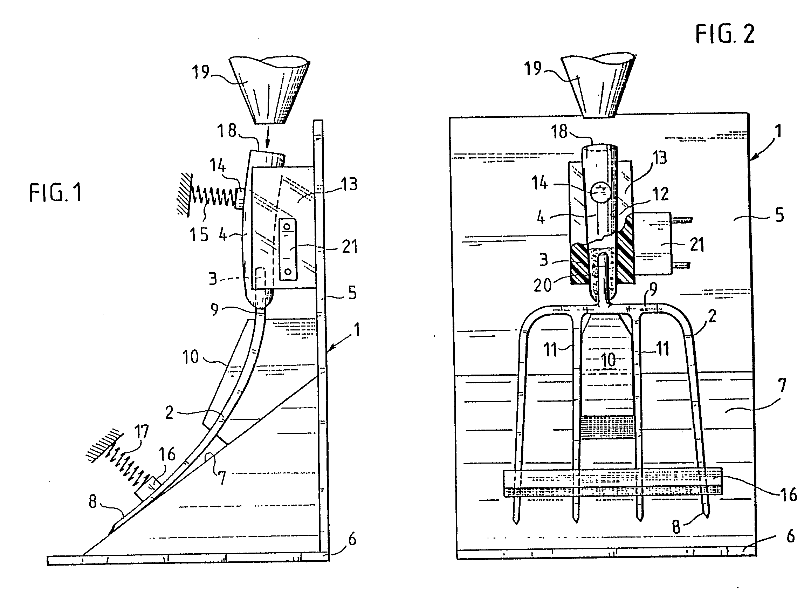

Dans la réalisation des figures 1 à 5, le dispositif conforme à l'invention comprend un support 1 qui maintient la soie 3 de la fourche à foin 2, engagée dans un tube 4, sensiblement suivant l'axe de ce dernier.

Le support 1 comporte à cet effet une plaque verticale 5 et une plaque horizontale 6 formant le socle du dispositif. Ces deux plaques 5 et 6 sont reliées ensemble par un pan incliné 7 sur lequel repose l'extrémité inférieure de la fourche 2.

L'extrémité supérieure 9 de la fourche 2 c'est-à-dire la base de cette dernière, repose sur un plot 10 fixé au pan incliné 7 et à la plaque verticale 5 en faisant saillie entre les deux dents centrales 11 de la forche 2.

Le tube 4 engagé axialement sur la soie 3 de la fourche est calé dans une gorge 12 évasée vers le haut, ménagée dans un plot 13 fixé à la plaque verticale 5, au-dessus du plot inférieur 10.

Le tube 4 est un appui contre la gorge 12 du plot 13 au moyen d'un tampon 14 sollicité par des moyens élastiques tels qu'un ressort 15 ou analogue.

L'extrémité inférieure de la forche 2 est en appui contre le pan incliné 7 au moyen d'une barre transversale 16 également sollicité par des moyens élastiques tels qu'un ressort 17.

Des moyens non représentés permettant de dégager le tampon 14 et la barre 16 pour pouvoir mettre en place la forche et le tube 4 sur le support et à pouvoir enlever facilement ces derniers de ce support 1.

Au droit de l'extrémité ouvert 18 du tube 4 est disposée une trémie 19 permettant d'introduire à l'intérieur du tube 4 une matière 20 (voir figure 2) que l'on décrira plus en détail plus loin, destinée à rendre la soie 3 de la fourche 2 solidaire du tube 4.

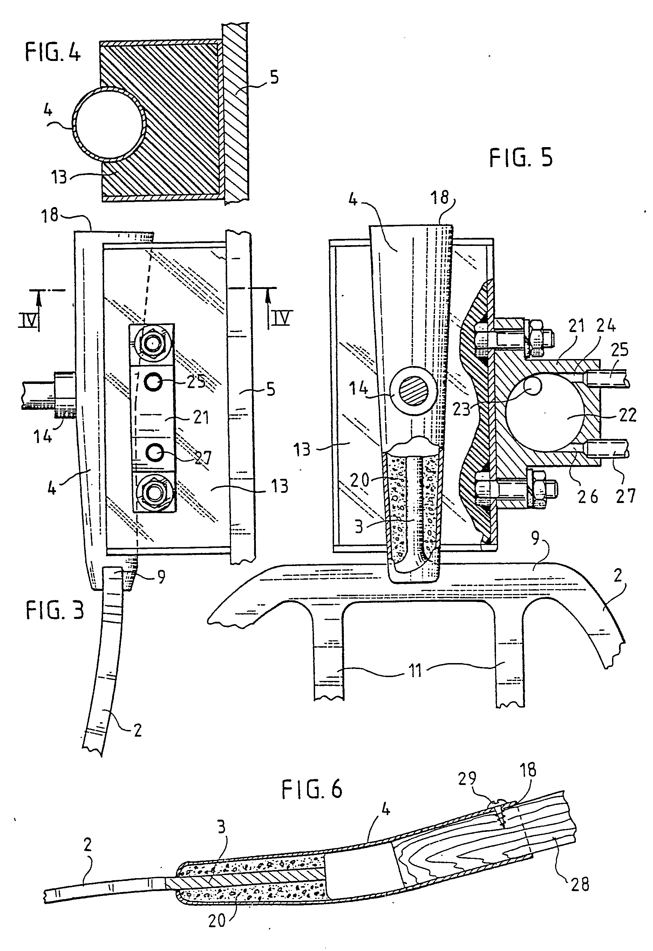

Contre l'une des faces latérales du plot supérieur 13 est fixé un vibreur 21 dont la structure détaillée est représentée sur la figure 5. Sur cette figure, on voit que ce vibreur comporte une cavité circulaire 22 renfermant une bille 23. Dans cette cavité 22 débouchent tangentiellement, un canal d'entrée 24 relié à une tubulure 25 d'arrivée d'air sous pression et un canal de sortie 26 relié à une tubulure 27 d'échappement.

On va maintenant décrire le fonctionnement du dispositif conforme à l'invention.

Dans une première étape, on positionne la fourche 2 sur le support 1. A cet effet, on suspend la base 9 de cette fourche 2 sur le plot inférieur 10 en disposant les branches centrales 11 de part et d'autre de ce plot. On plaque ensuite l'extrémité 8 des dents de la fourche contre le pan incliné 7 au moyen de la barre d'appui 16. On positionne ensuite le tube 4 dans la gorge 12 du plot supérieur 13 en enfilant l'extrémité inférieure de ce tube 4 sur la soie 3 de la fourche 2. Il suffit ensuite de plaquer le tube 4 contre le plot 13 au moyen du tampon d'appui 14.

Dans cette position, la soie 3 de la fourche 2 est disposée d'une manière très précise dans l'axe du tube 4.

On peut alors introduire à l'intérieur du tube 4, au moyen de la trémie d'alimentation 19, la matière 20.

Cette matière 20 comprend essentiellement des grains durs et anguleux tels que du quarz concassé des éclats de verre, de la genaille métallique et des débris de matière plastique ou de bois.

Ces grains présentent une granulométrie qui est fonction de la distance comprise entre la soie 3 de la fourche et la face interne du tube 4. Cette granulométrie doit être suffisamment fine pour que les grains puissent pénétrer à l'intérieur du tube 4 jusqu'au fond de ce dernier.

Les grains de la matière 20 sont introduits dans le tube 4 jusqu'à ce que le niveau de cette matière atteigne au moins l'extrémité supérieure de la soie 3, comme indiqué sur les figures 2 et 5.

On applique ensuite à l'ensemble constitué par le tube 4 et la fourche 2, des vibrations. A cet effet, on amène de l'air sous pression à l'intérieur de vibreur 21, ce qui provoque la mise en rotation de la bille 23 à l'intérieur de la cavité 22. Cette rotation de la bille 23 a pour effet de faire vibrer le tube 4 et la fourche 2 dans toutes les directions, dans un plan parallèle à la plaque verticale 5 (dans cet example).

L'amplitude et la fréquence de ces vibrations sont fonction des dimensions de la cavité 22 du vibreur 21, de la masse de la bille 23 et de la pression d'admission d'air dans cette cavité.

Ces vibrations provoquent un tassement des grains de matière 20. Du fait de ce tassement, les grains prennent appui les uns contre les autres, contre la soie 3 et contre la face interne du tube 4.

Ainsi, la soie 3 est rendue solidaire du tube 4 au moyen des grains imbriqués les uns par rapport aux autres. Cet effet est renforcé par la forme anguleuse des grains.

L'experience a montre que les meilleurs résultats étaient obtenus lorsque les grains de matière 20 présentent une granulométrie comprise entre 2 et 3 mm. Avec de telles dimensions, les grains sous l'effet des vibrations se bloquent mutuellement dans l'espace compris entre la soie 3 et le tube 4.

La fréquence des vibrations appliquées au tube 4 et à la fourche 2 peut varier entre 500 et 30.000 cycles par minute et leur amplitude entre 0,5 et 2 mm environ. La durée d'application de ces vibrations n'excéde en générale pas 15 secondes.

Dans le cas du vibreur 21, la force centrifuge exercée sur la bille 23 est de 650 Newton à 20.000 tours/mn.

Pour améliorer l'adérence et la fiabilité de la fixation obtenue par les grains de matière 20, il est avantageux d ajouter à ces derniers un ciment humidifié peu de temps avant l'introduction du mélange dans le tube 4.

Il est préférable également d'ajouter à ce mélange de fines particules de sable qui ont pour effet de combler les interstices compris entre les grains précités.

Le ciment peut également être additionné d'une résine soluble à l'eau à.base de latex telle qu'une résine commercialisée sous le nom de "Sikalatex". Cet ajout de résine permet d'améliorer l'adhérence, la souplesse et l'etanchéité du mélange de grains et de ciment.

On donne ci-après une composition de mélange de grains de sable et de ciment ayant donné d'excellents résultats.

Quartz concassé de granulométrie comprise entre 2 et 3 mm: une partie en poids

Sable fin: une partie en poids

Ciment ordinaire: 1/8éme de partie en poids

Avant utilisation, ce mélange est additionné d'eau contenant en solution une résine à base de latex du genre précité.

Après introduction d'un tel mélange dans le tube 4 et application des vibrations, la soie 3 de la fourche 2 est immédiatement rendue solidaire du tube 4, c'est-à-dire bien avant la prise du ciment que exige généralement une dizaine d'heures.

De ce fait, il est possible de dégager immédiatement du support 1 la fourche 2 fixée au tube 4, de sorte que ce support 1 devient aussitôt disponible pour recevoir un ensemble fourche-tube suivant de la chaîne de montage.

Ainsi, la fabrication en série peut être opérée d'une manière continue, sans interruption, ce qui permet une productivé extrêmement élevée.

Après avoir enlevé du support 1 la fourche 2 fixée au tube 4, il est possible de fixer après séchage au tube 4 un manchon 28, par exemple en bois (voir figure 6) la fixation de ce manche pouvant être assurée dans ce cas par une simple vis 29. Pour une question de facilité, le manche est introduit dans la·douille, on retourne l'ensemble pour frapper à terre l'extrémité du manche en vue d'obtenir une liaison douille par rapport au manche "forcée". Il est donc préférable de mettre le manche après la prise du "liant" car l'on risquerait de détériorer la liaison par des vibrations inverses.

Lorsque le tube 4 est cintré, le manche 28 peut être droit, donc de fabrication très économique.

Bien entendu, l'invention n'est pas limitée à l'exemple que l'on vient de décrire et on peut apporter à celui-ci de nombreuses modifications, sans sortir du cadre de l'invention.

Ainsi l'application des vibrations au tube 4 et à la fourche 2 peut être effectuée d'une autre manière que par le vibreur 21. En effet, la demanderesse a constaté que des vibrations d'amplitude et de fréquence suffisantes étaient obtenues en frappant manuellement le tube 4 avec une barre métallique ou un object analogue.

Par ailleurs, l'ensemble constitué par le tube 4, la fourche 2 et le support 1 pourraît encore être disposé sur une table vibrante.

**Revendications**

1. Procédé pour fixer un manche à un outil (2) à soie (3) dans lequel on engage sur la soie de l'outil un tube rigide (4), on maintient l'ensemble en position au moyen d'un support (1), on introduit dans le tube (4) une matière (20) pour rendre la soie (3) solidaire du tube (4) et on engage un manche (28) dans l'extrémité ouverte du tube opposée à l'outil, caractérisé en ce qu'on introduit dans le tube (4) des grains de matière dure, on ajoute du ciment, ce dernier étant humidifié avant la coulée du mélange dans le tube (4) on soumet l'ensemble constitué par le tube et l'outil à des vibrations en vue de produire un tassement des grains et on dégage ensuite du support (1) l'outil (2) ainsi. fixé au tube (4).

2. Procédé conforme à la revendication 1, caractérisé en ce que les grains de matière dure présentent une granulométrie comprise entre 2 et 3 mm environ.

3. Procédé conform à l'une quelconque des revendications 1 ou 2, caractérisé en ce que les grains sont anguleux.

4. Procédé conforme à l'une quelconque des revendications 1 à 3, caractérisé en ce que les grains sont choisis dans le groupe comprenant le quartz, le verre concassé, la grenaille métallique, les débris de matière plastique ou de bois et le mélange de ces matériaux.

5. Procédé conforme à l'une quelconque des revendications 1 à 4, caractérisé en ce qu'on ajoute en outre aux grains et/ou au mélange de grains et de ciment de fines particules de sable.

6. Procédé conforme à l'une quelconque des revendications 4 ou 5, caractérisé en ce que le ciment est additionné d'une résine soluble dans l'eau capable d'améliorer l'étanchéité, la souplesse et l'adhérence du mélange durci.

7. Procédé conforme à l'une quelconque des revendications 1 à 6, caractérisé en ce que les grains et/ou le mélange de grains et de ciment sont introduits dans le tube (4) en une quantité telle qu'ils remplissent le tube sur une hauteur au moins égale à la hauteur d'engagement de la soie (3) à l'intérieur du tube (4).

8. Procédé conforme à l'une quelconque des revendications 1 à 7, caractérisé en ce que la fréquence des vibrations appliquées au tube (4) et à l'outil (2) est comprise entre 500 et 30.000 cycles par minute et leur amplitude est comprise entre 0,5 et 2 mm environ.

9. Dispositive pour fixer un manche (28) à un outil (2) à soie (3) comprenant un support (1) pour maintenir la soie de l'outil engagée dans un tube (4) sensiblement suivant l'axe de ce dernier et des moyens (19) pour introduire à l'intérieur de ce tube (4) une matière (20) pour rendre la soie (3) de l'outil (2) solidaire du tube (4), caractérisé en ce qu'il comprend des moyens (21) pour appliquer à l'ensemble constitué par le tube et l'outil, des vibrations capables de produire un tassement de ladite matière (20) contenant des grains de matière dure et du ciment ce dernier etant humidifié avant la coulée du melange dans le tube (4).

10. Dispositif conforme à la revendication 9, caractérisé en ce que les moyens pour appliquer les vibrations sont directement reliés à une partie (13) du support (1) qui maintient le tube (4).

11. Dispositif conforme à l'une quelconque des revendications 9 ou 10, caractérisé en ce que lesdits moyens comprennent un vibreur (21) comportant une cavité circulaire (22) qui renferme une bille (23) entraînée en rotation sous l'effet d'un courant d'air tangentiel à cette cavité circulaire.

**Patantanspüche**

1. Verfahren zum Befestigen eines Stiels an einem mit einem Stielschaft (3) versehenen Werkzeug (2), bie welchem auf dem Stielschaft des Werkzeuges ein unbiegsames Rohr (4) angebracht wird, die Anordnung mittels einer Haltevorrichtung (1) in Position gehalten wird, ein Material (20) in das Rohr (4) eingebracht wird, um den Schaft (3) fest mit dem Rohr (4) zu verbinden, und ein Stiel (28) in das dem Werkzeug abgewandte offene Ende des Rohres eingeführt wird, dadurch gekennzeichnet, daß in das Rohr (4) Körner aus hartem Material eingebracht werden, daß Zement hinzugefügt wird, wobei der Zement angefeuchtet wird, bevor das Gemisch in das Rohr (4) gefüllt wird, daß die Anordnung aus Rohr und Werkzeug Vibrationen unterworfen wird, um ein Verdichten der Körner zu erreichen, und daß daraufhin die Haltevorrichtung (1) von dem auf diese Weise an dem Rohr (4) befestigten Werkzeug (2) losgemacht wird.

2. Verfahren nach Anspruch 1, dadurch gekennzeichnet, daß die aus dem harten Material bestehenden Körner ein Körnung von ca. 2 bis 3 mm aufweisen.

3. Verfahren nach Anspruch 1 oder 2, dadurch gekennzeichnet, daß die Körner eckig sind.

4. Verfahren nach einem der Ansprüche 1 bis 3, dadurch gekennzeichnet, daß die Körner aus der Gruppe umfassend Quarz, gebrochenes Glas, Metallkörner, kleine Stücke aus Kunststoff oder Holz und eine Mischung dieser Materialien ausgewählt werden.

5. Verfahren nach einem der Ansprüche 1 bis 4, dadurch gekennzeichnet, daß den Körnern und/oder dem Gemisch aus Körnern und Zement feine Sandteilchen hinzugefügt werden.

6. Verfahren nach Anspruch 4 oder 5, dadurch gekennzeichnet, daß dem Zement ein wasserlösliches Harz zugefügt wird, das die Dichtigkeit, die Flexibilität und die Haftfähigkeit des gehärteten Gemisches verbessert.

7. Verfahren nach einem der Ansprüche 1 bis 6, dadurch gekennzeichnet, daß die Körner und/oder das Gemisch aus Körnern und Zement in das Rohr (4) in einer Menge eingefüllt werden, daß sie das Rohr bis auf eine Höhe anfüllen, die mindestens gleich der Höhe des in das Innere des Rohres (4) ragenden Schaftes (3) ist.

8. Verfahren nach einem der Ansprüche 1 bis 7, dadurch gekennzeichnet, daß die Frequenz der auf das Rohr (4) und auf das Werkzeug (2) wirkenden Vibrationen zwischen 500 und 30000 Schwingungen pro Minute beträgt und daß die Vibrationsamplitude etwa zwischen 0,5 und 2 mm liegt.

9. Vorrichtung zur Befestigung eines Stieles (28) an einem mit einem Stielschaft (3) versehenen Werkzeug (2), bestehend aus einer Haltevorrichtung (1) zum Halten des in ein Rohr (4) im wesentlichen entlang seiner Achse ragenden Stielschaftes (3) des Werkzeugs (2) und aus Mitteln (19) zum Einbrigen eines Materials (20) in das Innere des Rohres (4) zum Zwecke der festen Verbindung des Stielshaftes (3) des Werkzeugs (2) mit dem Rohr (4), dadurch gekennzeichnet, daß Einrichtungen (21) vorgesehen sind, mit denen Vibrationen auf die Anordnung aus Rohr und Werkzeug ausgeübt werden, Vibrationen, mit denen eine Verdichtung des Materials (20) erreichbar ist, das Körner aus harten Material und Zement enthält, wobei letzterer vor dem Einfüllen des Gemisches in das Rohr (4) befeuchtet wird.

10. Vorrichtung nach Anspruch 9, dadurch gekennzeichnet, daß die Einrichtungen zur Ausübung der Vibrationen direkt mit einem Teil (13) der das Rohr (4) haltenden Haltevorrichtung (1) verbunden sind.

11. Vorrichtung nach Anspruch 9 oder 10, dadurch gekennzeichnet, daß die genannten Einrichtungen einen Rüttler (21) enthalten, der eine kreisförmige Kammer (22) aufweist, die eine Kugel (23) einschließt, die unter der Wirkung eines tangentialen Luftstromes in der kreisförmigen Kammer in Umlauf versetzt wird.

**Claims**

1. Method for attaching a handle to a tool (2) having a tang (3) in which a rigid tube (4) is engaged over the tang, the assembly is maintained in position by means of a support (1), a material (20) for rigidly fixing the tank (3) to the tube (4) is introduced into the tube (4) and a handle (28) is engaged within the open end of the tube remote from the tool, characterized in that grains of hard material are introduced into the tube (4) and that cement is added, this latter being humidified prior to pouring of the mixture into the tube (4), the assembly consisting of tube and tool is subjected to vibrations in order to produce compression of the grains and the support (1) is then disengaged from the tool (2) which has thus been attached to the tube (4).

2. Method in accordance with claim 1, characterized in that the grains of hard material have a particle size within the range of 2 to 3 mm approximately.

3. Method in accordance with either of claims 1 or 2, characterized in that the grains have angular shapes.

4. Method in accordance with any one of claims 1 to 3, characterized in that the grains are selected from the group comprising quartz, crushed glass, granulated metal, fragments of plastic material or of wood and a mixture of these materials.

5. Method in accordance with any one of claims 1 to 4, characterized in that fine particles of sand are also added to the grains and/or to the mixture of grains and cement.

6. Method in accordance with either of claims 4 or 5, characterized in that the cement receives an addition of a water-soluble resin which is capable of improving water-tightness, flexibility and adhesive strength of the hardened mixture.

7. Method in accordance with any one of claims 1 to 6, characterized in that the grains and/or the mixture of grains and cement are introduced into the tube (4) in a quantity such that they fill the tube to a depth at least equal to the depth of engagement of the tang (3) within the tube (4).

8. Method in accordance with any one of claims 1 to 7, characterized in that the frequency of vibrations applied to the tube (4) and to the tool (2) is within the range of 500 to 30,000 cycles per minute and their amplitude is within the range of approximately 0.5 to 2 mm.

9. Device for attaching a handle (28) to a tool (2) having a tang (3) comprising a support (1) for maintaining the tang of the tool engaged within a tube (4) substantially along the axis of this latter and means (19) for introducing within this tube (4) a material (20) for rigidly fixing the tang (30) of the tool (2) to the tube (4), characterized in that it comprises means (21) for applying to the assembly consisting of tube and tool vibrations which are capable of producing compression of said material (20) which contains grains of hard material and cement, this latter being humidified prior to pouring of metal along the tube (4).

10. Device in accordance with claim 9, characterized in that the means for applying vibrations are directly connected to a portion (13) of the support (1) which maintains the tube (4).

11. Device in accordance with either of claims 9 or 10, characterized in that said means comprise a vibrator (21) having a circular cavity (22) which contains a ball (23) driven in rotation under the action of an airstream which is tangential to this circular cavity.

FIG. 1

FIG. 2

0 060 154

FIG. 4

FIG. 5

FIG. 3

FIG. 6